(19) Europäisches Patentamt
European Patent Office
Office européen des brevets

(11) EP 0 837 327 B1

(12) EUROPÄISCHE PATENTSCHRIFT

(45) Veröffentlichungstag und Bekanntmachung des Hinweises auf die Patenterteilung:
**13.12.2000 Patentblatt 2000/50**

(51) Int Cl.[7]: **G01N 31/22**, G01N 21/80

(21) Anmeldenummer: **97890203.9**

(22) Anmeldetag: **10.10.1997**

(54) **Verfahren und Sensorschicht zur quantitativen Bestimmung zumindest einer chemischen Komponente einer gasförmigen oder flüssigen Probe**

Process and sensor layer for the quantitative determination of at least one chemical component of a gaseous or liquid sample

Procédé et couche de capteur pour la détermination quantitative d'au moins un composant chimique d'un échantillon gazeux ou liquide

(84) Benannte Vertragsstaaten:
**DE FR GB**

(30) Priorität: **16.10.1996 AT 181896**

(43) Veröffentlichungstag der Anmeldung:
**22.04.1998 Patentblatt 1998/17**

(73) Patentinhaber: **AVL Medical Instruments AG**
**8207 Schaffhausen (CH)**

(72) Erfinder:
- **Wolfbeis,Otto S.,Prof.Dr.**
  **93051 Regensburg (DE)**
- **Werner,Tobias,Dr.**
  **93051 Regensburg (DE)**
- **Klimant,Ingo,Dr.**
  **93051 Regensburg (DE)**
- **Kosch,Ute,Dipl.-Chem.**
  **93051 Regensburg (DE)**
- **Leiner,Marco Jean Pierre,Dr.**
  **8045 Graz (AT)**

(74) Vertreter: **Babeluk, Michael, Dipl.-Ing. Mag.**
**Patentanwalt**
**Mariahilfer Gürtel 39/17**
**1150 Wien (AT)**

(56) Entgegenhaltungen:
**EP-A- 0 214 768**
**EP-A- 0 552 107**
**WO-A-92/12413**
**WO-A-96/41166**
**US-A- 4 762 799**
**US-A- 5 232 858**
**US-A- 5 464 587**

- **WERNER T. ET AL: "Ammonia-sensitive Polymer Matrix Employing Immobilized Indicator Ion Pairs" ANALYST, Bd. 120, 1995, Seiten 1627-1631, XP002053853**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 837 327 B1

## Beschreibung

Die Erfindung betrifft eine Sensorschicht zur quantitativen Bestimmung zumindest einer chemischen Komponente einer gasförmigen oder flüssigen Probe, welche einen auf die zu bestimmende Komponente direkt oder indirekt durch Änderung seines Absorptionsspektrums reagierenden Chromophor und einen auf die zu bestimmende Komponente nicht ansprechenden Luminophor aufweist, wobei das Emissionsspektrum des Luminophors zumindest teilweise mit dem Absorptionsspektrum des Chromophors überlappt und der Energietransfer zwischen Luminophor und Chromophor zumindest eine Lumineszenzeigenschaft des Luminophors meßbar ändert.

Im folgenden werden unter Luminophore Farbstoffe verstanden, welche nach entsprechender Strahlungsanregung Phosphoreszenz- oder Fluoreszenzstrahlung emittieren. Das Absorptionsspektrum des Chromophors wird entweder direkt durch die zu messende Komponente oder indirekt durch ein chemisches Reaktionsprodukt der zu messenden Komponente beeinflußt. Unter "quantitative Bestimmungen einer chemischen Komponente" wird sowohl die Bestimmung der Konzentration, der Aktivität als auch des Gaspartialdruckes verstanden, wobei aus den Werten der Lumineszenzabklingzeit oder der Lumineszenzintensität des Luminophors auf die Meßgröße geschlossen wird.

Die eingangs genannte Sensorschicht basiert auf einem in der AT 393 035 beschriebenen Verfahren, bei welchem pH- und kationensensitive Chromophore (Akzeptor) vorzugsweise kovalent an einen Luminophor (Donor) gebunden werden. Aus der Lumineszenzabklingzeit des Luminophors wird auf den pH-Wert bzw. auf die Konzentration des zu bestimmenden Kations im Probenmedium geschlossen.

Ein ähnliches Verfahren ist aus der EP-A 214 768 bekannt. Hier wird aus der gemessenen Lumineszenzintensität auf die Konzentration des zu bestimmenden Parameters im Probenmedium geschlossen.

Die strahlungslose Energietransferrate von Donor- zu Akzeptormolekülen hängt von der räumlichen Nähe der Moleküle beider Substanzen ab. Infolge dessen ändern sich die makroskopisch bestimmbaren Werte der lumineszenzoptischen Parameter (Lumineszenzquantenausbeute, Lumineszenzabklingzeit) des Luminophors besonders effizient, wenn eine substantielle Anzahl von Molekülen beider Substanzen in engen räumlichen Kontakt gebracht wird.

Zur Herstellung des engen räumlichen Kontaktes wird in der AT 393 035 die kovalente Verbindung von Donor- und Akzeptormolekülen vorgeschlagen. In der EP 214 768 werden individuelle Donor- und Akzeptormoleküle kovalent an die Oberfläche eines gemeinsamen Substrates, z. B. Glas, gebunden.

Die kovalente Verbindung von Donor und Akzeptormolekülen hat vor allem den Nachteil, daß der synthetische Aufwand zur Herstellung kovalenter Verbindungen vorteilhafter Luminophore mit geeigneten pH- oder ionensensitiven Chromophoren besonders hoch ist.

Die kovalente Anbindung von Donor- und Akzeptormolekülen an die Oberfläche eines gemeinsamen Substrates ist ebenfalls sehr aufwendig und hat vor allem den Nachteil, daß Grenzflächeneffekte die Qualität der Meßergebnisse nachteilig beeinflussen.

Aufgabe der Erfindung ist es, eine Sensorschicht vorzuschlagen, bei welcher besonders aufwendige chemische Syntheseschritte zur Realisierung der räumlichen Nähe einer substantiellen Anzahl von Donor und Akzeptormolekülen, sowie nachteilige Einflüsse von Grenzflächeneffekten vermieden werden.

Das wird erfindungsgemäß dadurch gelöst, daß der Luminophor und der Chromophor elektrisch unterschiedlich geladene ionische Substanzen sind, welche in Form von Ionenpaaren in einem für die zu bestimmende chemische Komponente permeablen Matrixmaterial vorliegen.

In einer ersten Ausführungsvariante ist vorgesehen, daß im Matrixmaterial ein anionischer Chromophor und ein kationischer Luminophor vorliegen, wobei jeweils n Chromophormoleküle der Ladungszahl -m und m Luminophormoleküle der Ladungszahlen +n ein n:m Ionenpaar bilden; in einer zweiten Ausführungsvariante ist vorgesehen, daß im Matrixmaterial ein kationischer Chromophor und ein anionischer Luminophor vorliegen, wobei jeweils n Chromophormoleküle der Ladungszahl +m und m Luminophormoleküle der Ladungszahl -n ein n:m Ionenpaar bilden.

Wie aus den nachfolgenden Beispielen ersichtlich, ist die Herstellung von Innenpaaren wesentlich einfacher als die Herstellung komplexer Moleküle über mehrstufige Syntheseschritte.

Besonders vorteilhafte erfindungsgemäße Luminophore (Donor) zeichnen sich durch eine hohe Lumineszenzquantenausbeute und eine lange Lumineszenzabklingzeit ( > 100 ns) aus. Bevorzugte Luminophore sind kationische metallorganische Komplexe des Palladiums, Rhodiums, Platins, Rutheniums, Osmiums, der seltenen Erden (insbesonders Europium und Lanthan). Der organische Teil dieser metallorganischen Komplexe kann z.B. aus Liganden aus der Gruppe der Porphyrine, Bipyridyle, Phenanthroline oder anderer heterozyklischer Verbindungen bestehen.

Bevorzugte pH- und kationensensitive Chromophore (Akzeptor) sind anionische Substanzen, deren Lichtabsorption sich durch direkte oder indirekte chemisch/physikalische Wechselwirkung mit der zu bestimmenden Komponente des Probenmediums verändert, und deren Absorptionsspektrum sich zumindest teilweise mit dem Emissionsspektrum des Luminophors überlappt.

**I) Bestimmung des pH-Wertes einer Probe**

Optische Sensoren zur Bestimmung des pH-Wertes enthalten gemäß Stand der Technik (M.J.P. Leiner and O.S. Wolfbeis "Fiber Optic pH Sensors" in O.S. Wolfbeis "Fiber Optic Chemical Sensors and Biosensors", CRC-Press, Boca Raton, 1991, Vol. I, Chapter 8) zumeist einen in einer ionenpermeablen, vorzugsweise hydrophilen Polymermatrix vorliegenden Absorptionsfarbstoff (Chromophor) oder Fluoreszenzfarbstoff. In Abhängigkeit des pH-Wertes (pH = -log (*a*H+)) des Probenmediums stellt sich ein thermodynamisches Gleichgewicht zwischen den protonierten und deprotonierten Formen des Chromophors bzw. Fluorophors ein. Aus dem mit optischen Methoden meßbaren Konzentrationsverhältnis beider Formen kann auf den pH-Wert des Probenmediums rückgeschlossen werden.

$$\text{Reaktion:} \qquad \Gamma H \leftrightarrow \Gamma^- + H^+$$

$\Gamma H$ ist die protonierte und $\Gamma^-$ ist die deprotonierte Form des Chromophors. $H^+$ steht für ein Proton.

In der eingangs erwähnten AT 393 035 werden pH-sensitive Chromophore beschrieben, welche vorzugsweise kovalent an einen pH-insensitiven Luminophor (Donor) gebunden werden. Aus der Lumineszenzabklingzeit des Luminophors (L) wird auf den pH-Wert der Meßlösung geschlossen.

$$\text{Reaktion:} \qquad L\Gamma H \leftrightarrow L\Gamma^- + H^+$$

Zur erfindungsgemäßen lumineszenzoptischen pH-Bestimmung werden beispielsweise n:m Ionenpaare { n $(\Gamma H)^{-m}$ $mL^{+n}$ } bestehend aus einem anionischen pH-sensitiven Chromophor ($\Gamma H^{-m}$) der Ladungszahl -m und einem kationischen, pH-insensitiven Luminophor ($L^{+n}$) der Ladungszahl +n verwendet, welche in einer hydrophilen Polymermatrix vorliegen.

Reaktion:

$$\left\{ n(\Gamma H)^{-m} mL^{+n} \right\} \longleftrightarrow \left\{ n\Gamma^{-m} mL^{+n} \right\}^{-n} + nH^+$$

Bei niedrigen pH-Werten (pH << pKa des Chromophors) des Probenmediums liegt der Chromophor vollständig in der protonierten Form vor. Wegen der minimalen spektralen Überlappung der Absorptionsbande des deprotonierten Chromophors und der Emissionsbande des Luminophors erreicht die strahlungslose Energietransferrate vom Luminophor zum Chromophor ein Minimum. Entsprechend erreichen die Werte der mittleren Lumineszenzabklingzeit und der relativen Lumineszenzintensität des Luminophors ein Maximum.

Bei hohen pH-Werten (pH >> pKa des Chromophors) des Probenmediums liegt der Chromophor vollständig in der deprotonierten Form vor. Wegen der maximalen spektralen Überlappung der Absorptionsbande des deprotonierten Chromophors und der Emissionsbande des Luminophors erreicht die strahlungslose Energietransferrate vom Luminophor zum Chromophor ein Maximum. Entsprechend erreichen die Werte der mittleren Lumineszenzabklingzeit und der relativen Lumineszenzintensität des Luminophors ein Minimum.

Bei der pH-Werten des Probenmediums im Bereich von +/- 1.5 pH-Einheiten vom pKa-Wert des Chromophors, kann aus der mittleren Lumineszenzabklingzeit oder der relativen Lumineszenzintensität des Luminophors mit ausreichender Genauigkeit auf den pH-Wert des Probenmediums geschlossen werden.

**II) Bestimmung der Konzentration bzw. der Aktivität von Kationen und Anionen in einer Probe (Li+, Na+, K+, Mg++, Ca++, Cl-)**

Bisher bekannt gewordene optische Sensoren bzw. optische Meßverfahren zur Bestimmung der Konzentration bzw. Aktivität von Kationen in einem Probenmedium beruhen auf unterschiedlichen Verfahren. So beschreibt die eingangs erwähnte AT 393 035 kationensensitive Chromophore ($\Gamma$), welche vorzugsweise kovalent an einen kationeninsensitiven Luminophor (L) gebunden werden.

$$\text{Reaktion:} \qquad (\Gamma L) + Y^{+p} \leftrightarrow (L\Gamma Y)^{+p}$$

Y ist das zu bestimmende Kation mit der Ladungszahl +p.

Erfindungsgemäße kationensensitive Chromophore ($\Gamma^{-m}$) tragen zumindest eine anionische Gruppe der Ladungszahl -m, sodaß sie mit einem erfindungsgemäßen kationischen Luminophor ($L^{+n}$) der Ladungszahl +n ein n:m Ionenpaar bilden können.

Reaktion:

$$\left\{ n(\Gamma)^{-m} mL^{+n} \right\} + nY^{+p} \xleftrightarrow{Kd} \left( \left\{ n\Gamma^{-m} mL^{+n} \right\} nY \right)^{+p}$$

Y ist das zu bestimmende Kation, mit der Ladungszahl +p, Kd ist die Dissoziationskonstante des kationensensitiven Chromophors.

Bei sehr hohen Kationenkonzentrationen ($cY^{+p}$ >> Kd des Chromophors) des Probenmediums liegt der Chromophor vollständig in der komplexierten Form vor. Bei sehr niedrigen Kationenkonzentrationen ($cY^{+p}$ << Kd des Chromophors) des Probenmediums liegt der Chromophor in freier, unkomplexierten Form vor.

Liegt die logarithmische Konzentration $\log(cY^{+P})$ des zu bestimmenden Kations des Probenmediums im Bereich von log(Kd) +/- 1.5, so kann mit ausreichender Genauigkeit aus der mittleren Lumineszenzabklingzeit bzw. der relativen Lumineszenzintensität des Luminophors auf die Konzentration des zu bestimmenden Kations im Probenmedium geschlossen werden.

Weitere optische Meßverfahren bzw. Sensoren zur Bestimmung der Konzentration bzw. Aktivität von Kationen, sind z. B. aus der US-A 4,645,744, EP 0 358 991 B1 und der EP 0 461 392 A2 bekannt geworden, wobei ein pH-sensitiver Chromophor (ΓH) bzw. ein pH-sensitiver Luminophor und ein ladungsneutraler Ionophor (I) in einer im wesentlichen hydrophoben Polymermatrix vorliegen. Das geoffenbarte Meßverfahren basiert darauf, daß Kationen ($Y^{+p}$) mit dem Probenmedium (beispielsweise $K^+$ gegen $H^+$ oder $Ca^{++}$ gegen $2H^+$) ausgetauscht werden. Infolgedessen sind die Meßergebnisse abhängig vom pH-Wert des Probenniediums. Derartige Meßverfahren sind für jene Meßsituationen geeignet, wo der pH-Wert des Probenmediums bekannt ist oder mittels einer pH-Pufferschicht auf einen bekannten Wert eingestellt werden kann.

Reaktion: $$p(\Gamma H) + I + Y^{+p} \leftrightarrow IYp\Gamma + p(H^+)$$

Y ist das zu bestimmende Kation, +p ist seine Ladungszahl.

In einer erfindungsgemäßen Weiterbildung dieser Methoden werden zur Bestimmung der Kationenkonzentration einer Probe n:m Ionenpaare $\{n(\Gamma H)^{-m}mL^{+n}\}$ bestehend aus einem anionischen pH-sensitiven Chromophor ($(\Gamma H)^{-m}$) der Ladungszahl -m und einem kationischen pH-insensitiven Luminophor ($L^{+n}$) der Ladungszahl +n sowie ein für das zu bestimmende Kation selektiver ladungsneutraler Ionophor (I) vorgesehen, welche in einer hydrophoben Polymermatrix vorliegen

Reaktion:

$$\frac{p}{n}\left\{ n(\Gamma H)^{-m} mL^{+n} \right\} + \frac{n}{p} I + \frac{n}{p} Y^{+p} \longleftrightarrow \left( \frac{p}{n}\left\{ n\Gamma^{-n} mL^{+n} \right\} \frac{n}{p} IY \right) + p(H^+)$$

Y ist das zu bestimmende Kation, +p ist dessen Ladungszahl.

Erfindungsgemäß verwendbare neutrale Ionophore sind in Tab. 2 beispielhaft angeführt. Beispiele für erfindungsgeinäße Chromophore sind in Tab. 1 angeführt. In Beispiel 3 ist die Herstellung eines kaliumsensitiven Sensors beschrieben. Fig. 3 zeigt die entsprechenden Meßergebnisse.

Aus der EP 0 358 991 B1 bzw. aus Anal. Chim. Acta 255 (1991), p. 35-44 sind optische Sensoren zur Bestimmung von Anionen, beispielsweise $C1^-$ bekannt, wobei das zu bestimmende Anion zusammen mit einem Kation aus dem Probenmedium co-extrahiert wird (beispielsweise $Cl^-$ und $H^+$). Hier liegen ein lipophiler pH-sensitiver Chromophor (Fluoresceinderivat) und eine optisch inaktive kationische Substanz ($Q^+$) in einer im wesentlichen hydrophoben Polymermatrix vor.

In Abhängigkeit der $H^+$ und der $Cl^-$ Konzentration des Probenmediums liegt der in der Polymermatrix befindliche pH-sensitive Chromophor (ΓH) in der protonierten und/oder deprotonierten Form vor. Mit zunehmenden Deprotonierungsgrad steigt die Absorption der deprotonierten Form. Der Deprotoniergungsgrad (und infolge dessen die Absorption) ist abhängig vom pH-Wert und der Konzentration des zu bestimmenden Anions. Der pH-Wert des Probenmediums muß bekannt sein bzw. auf einen bekannten Wert eingestellt werden, um auf die Konzentration des zu bestimmenden Anions schließen zu können.

Reaktion:

$$\left(\Gamma^-Q^+\right) + H^+ + X^- \longleftrightarrow \Gamma H + \left(Q^+X^-\right)$$

$X^-$ ist das zu bestimmende Anion

In einer erfindungsgemäßen Weiterbildung der geoffenbarten Methode, werden beispielsweise zur Bestimmung der Chloridkonzentration einer Probe n:m Ionenpaare $\{n(\Gamma^-Q^+)^{-m}mL^{+n}\}$ vorgesehen, welche aus einem anionischen deprotonierten pH-sensitiven Chromophor $((\Gamma)^{-(m+1)})$ der Ladungszahl -(m+1) verbunden mit einer lipophilen kationischen Substanz ($Q^+$) der Ladungszahl +1, somit einer Gesamtladungszahl -m und einem kationischen pH-insensitiven Luminophor ($L^{+n}$) der Ladungszahl +n bestehen, welche in einer hydrophoben, von Chloridionen der Probe mittels Co-extraktion permeablen Polymermatrix vorliegen. Die lipophile Substanz (Q+) kann z. B. eine quaternierte Ammoniumverbindung sein.

Reaktion:

$$\left\{n\left(\Gamma^-Q^+\right)^{-m}mL^{+n}\right\} + nH^+ + nX^- \longleftrightarrow \left\{n\Gamma H^{-m}mL^{+n}\right\} + n\left(Q^+X^-\right)$$

wobei m die Ladungszahl des protonierten anionischen Chromophors und n die Ladungszahl des kationischen Luminophors sind.

Erfindungsgemäße pH-sensitive Chromophore sind in Tab. 1 beispielhaft angeführt. Bei niedrigen pH-Werten und hohen Chloridkonzentrationen des Probenmediums liegt der pH-sensitive Chromophor vorzugsweise in der protonierten Form vor und die optisch inaktive kationische Substanz bildet in der Matrix ein Gegenion zu $Cl^-$. Die Absorption der deprotonierten Chromophorform erreicht ein Minimum. Die Werte der mittleren Lumineszenzabklingzeit und der relativen Lumineszenzintensität des Luminophors erreichen ein Maximum.

Bei hohen pH-Werten und niedrigen Chloridkonzentrationen des Probenmediums liegt der pH-sensitive Chromophor vorzugsweise in der deprotonierten Form vor, wobei die optisch inaktive kationische Substanz die durch die Dissoziation des Protons entstandene negative Ladung kompensiert. Die Absorption der deprotonierten Chromophorform erreicht ein Maximum. Die Werte der mittleren Lumineszenzabklingzeit und der relativen Lumineszenzintensität des Luminophors erreichen ein Minimum.

Ist der pH-Wert des Probenmediums bekannt, kann aus den Werten der mittleren Lumineszenzabklingzeit bzw. der relativen Lumineszenzintensität des Luminophors auf die Chloridkonzentration des Probenmediums geschlossen werden.

Erfindungsgemäß ist es auch möglich, beispielsweise zur Bestimmung der Chloridkonzentration einer Probe, ein n:m Ionenpaare $\{n\Gamma^{-m}mL^{+n}\}$ bestehend aus einem anionischen deprotonierten pH-sensitiven Chromophor ($\Gamma^{-m}$) der Ladungszahl -m und einem kanonischen pH-insensitiven Luminophor ($L^{+n}$) der Ladungszahl +n vorzusehen, welche in einer hydrophoben, von Chloridionen der Probe mittels Co-extraktion permeablen Polymermatrix vorliegen. Es wird dabei die optisch inaktive kationische Substanz ($Q^+$) durch den kationischen Luminophor ersetzt:

$$\left\{n\Gamma^{-m}mL^{+n}\right\} + nH^+ + nX^- \longleftrightarrow \left\{n(\Gamma H)^{-(m-1)}X^-mL^{+n}\right\}$$

wobei m die Ladungszahl des deprotonierten anionischen Chromophors und n die Ladungszahl des kationischen Luminophors bedeuten.

**III) Bestimmung von in wässriger Umgebung schwach sauer oder basisch reagierender, unter normalen Bedingungen gasförmig vorliegender Komponenten flüssiger oder gasförmiger Probenmedien:**

**Bestimmung von $CO_2$**

Optische Sensoren zur Bestimmung des $CO_2$ -Partialdruckes eines flüssigen oder gasförmigen Probenmediums bestehen zumeist aus einem Reaktionsraum, welcher von einem ionenimpermeablen, gaspermeablen Material vom Meßgut getrennt wird. Der Reaktionsraum ist häufig identisch mit dem indikatortragenden Material eines optischen pH-Sensors. Zudem befinden sich üblicherweise im Reaktionsraum eine oder mehrere pH-Puffersubstanzen, beispielsweise Carbonate, Phosphate, und/oder in wässrigen Medien sauer oder basisch reagierende organische Verbindungen. Die $pCO_2$ -Bestimmung des Probenmediums kann somit auf eine optische pH-Bestimmung zurückgeführt werden.

In einer in der EP-A 0 205 870 beschriebenen Ausführungsvariante dieses Meßprinzips liegt der Reaktionsraum in Form von "Tröpfchen" in einem ionenimpermeablen, gaspermeablen Polymermaterial vor.

Reaktion: $$CO_2 + H_2O \leftrightarrow H_2CO_3$$

$$H_2CO_3 \leftrightarrow HCO_3^- + H^+$$

$$\Gamma H \leftrightarrow \Gamma^- + H^+$$

In einer erfindungsgemäßen Weiterbildung der lumineszenzoptischen $CO_2$-Bestimmung werden n:m Ionenpaare $\{n(\Gamma H)^{-m} mL^{+n}\}$ bestehend aus einem anionischen pH-sensitiven Chromophor ($\Gamma H^{-m}$) der Ladungszahl -m und einem kationischen, pH-insensitiven Luminophor ($L^{+n}$) der Ladungszahl +n vorgesehen, welche in einem von der Probe durch ein ionenimpermeables, gaspermeables Material getrennten Reaktionsraum in einer wäßrigen Pufferlösung vorliegen.

Reaktion: $$CO_2 + H_2O \longleftrightarrow H_2CO_3$$

$$H_2CO_3 \longleftrightarrow HCO_3^- + H^+$$

$$\{n(\Gamma H)^{-m} mL^{+n}\} \longleftrightarrow \{n\Gamma^{-m} mL^{+n}\}^{-n} + nH^+$$

Die $CO_2$-Bestimmung mit erfindungsgemäßen Sensoren bestehend aus einem, einen wässrigen pH-Puffer enthaltenden Reaktionsraum und einem, den Reaktionsraum vom Probenmedium trennenden ionenimpermeablen gaspermeablen Material, wird auf eine Bestimmung des pH-Wertes im Reaktionsraum des Sensors zurückgeführt (siehe Beispiele 1 und 2). Hohe $CO_2$-Werte des Probenmediums entsprechen niederen pH-Werten des Reaktionsraumes und niedrige $CO_2$-Werte des Probenmediums entsprechen hohen pH-Werten des Reaktionsraumes.

Ein alternatives Verfahren zur optischen $CO_2$ Bestimmung, welche mit einem einzigen Reaktionsraum ohne Zuhilfenahme wässriger pH-Puffersubstanzen auskommt, wurden von Mills et al. in Anal. Chem. 64, 1992, 1383-1389 beschrieben. Hierbei liegt die deprotonierte Form eines pH-sensitiven Chromophors mit einer optisch inaktiven kationischen Substanz ($Q^+$) in einem Reaktionsraum bestehend aus einem essentiell ionenimpermeablen, gaspermeablen Polymermaterial vor. In das Polymermaterial diffundierendes $CO_2$ der Probe wird hydratisiert und reagiert in einer chemischen Gleichgewichtsreaktion mit der deprotonierten Chromophorform und der optisch-inaktiven Substanz. Aus der Lichtabsorption der deprotonierten Chromophorform wird auf den $CO_2$-Partialdruck des Probenmediums geschlossen.

Reaktion: $$CO_2 + H_2O \longleftrightarrow H_2CO_3$$

$$(\Gamma^- Q^+) + H_2CO_3 \longleftrightarrow (Q^+ HCO_3^-) + \Gamma H$$

In einer erfindungsgemäßen Variante der lumineszenzoptischen $CO_2$ -Bestimmung werden n:m Ionenpaare

$\{n(\Gamma^{-}Q^{+})^{-m}\, mL^{+n}\}$ vorgesehen, welche aus einem anionischen deprotonierten pH-sensitiven Chromophor $((\Gamma)^{-(m+1)})$ der Ladungszahl -(m+1) verbunden mit einer lipophilen kationischen Substanz ($Q^{+}$) der Ladungszahl +1, somit einer Gesamtladungszahl -m und einem kationischen pH-insensitiven Luminophor ($L^{+n}$) der Ladungszahl +n bestehen, welche in einer hydrophoben, im Fall wässriger Proben für ionische Substanzen impermeablen Polymermatrix vorliegen.

Reaktion:

$$CO_2 + H_2O \longleftrightarrow H_2CO_3$$

$$\left\{n\left(\Gamma^{-}Q^{+}\right)^{-m} mL^{+n}\right\} + nH_2CO_3 \longleftrightarrow n\left(Q^{+}HCO_3^{-}\right) + \left(n(\Gamma H)^{-m} mL^{+n}\right)$$

wobei m die Ladungszahl des protonierten anionischen Chromophors und n die Ladungszahl des kationischen Luminophors ist.

Die $CO_2$-Bestimmung mit einem Sensor, bestehend aus einem Reaktionsraum ohne wässrige Puffersubstanzen, wird erfindungsgemäß auf die Bestimmung des Verhältnisses der protonierten und deprotonierten Formen eines pH-sensitiven Chromophors zurückgeführt.

Bei sehr niedrigen $CO_2$-Werten des Probenmediums liegt der Chromophor vorzugsweise in der deprotonierten Form vor und bildet in der Matrix eine ionale Verbindung mit der optisch inaktiven kationischen Substanz. Die Absorption der deprotonierten Chromophorform erreicht ein Minumum. Die Werte der mittleren Lumineszenzabklingzeit und die relativen Lumineszenzintensität des Luminophors erreichen ein Maximum.

Bei hohen $CO_2$-Werten des Probenmediums liegt der Chromophor in der protonierten Form vor. Die optisch inaktive kationische Substanz bildet eine ionale Verbindung mit Hydrogencarbonat. Die Absorption der deprotonierten Chromophorform erreicht ein Minimum. Die Werte der mittleren Lumineszenzabklingzeit und die relativen Lumineszenzintensität des Luminophors erreichen ein Minimum.

Erfindungsgemäß ist es auch möglich, daß n:m Ionenpaare $\{n\Gamma^{-m} mL^{+n}\}$ bestehend aus einem anionischen deprotonierten pH-sensitiven Chromophor ($\Gamma^{-m}$) der Ladungszahl -m und einem kationischen pH-insensitiven Luminophor ($L^{+n}$) der Ladungszahl vorgesehen sind, welche in einer hydrophoben, im Fall wässriger Proben für ionischen Substanzen impermeablen Polymermatrix vorliegen. Im Unterschied zum voranstehenden Fall wird hier die optisch inaktive kationische Substanz ($Q^{+}$) durch den kationischen Luminophor ersetzt:

$$\left\{n\Gamma^{-m} mL^{+n}\right\} + nH_2CO_3 \longleftrightarrow \left\{n(\Gamma H)^{-m}\, n(HCO3)^{-}\, mL^{+n}\right\}$$

wobei m die Ladungszahl des deprotonierten anionischen Chromophors und n die Ladungszahl des kationischen Luminophors bedeuten.

**Bestimmung von $NH_3$**

Die Bestimmung von $NH_3$, als Beispiel für eine in wässriger Umgebung basisch reagierende Komponente kann ähnlich der Bestimmung von $CO_2$ nach Mills. (T.Wemer et al., Analyst 120, 1995, 1627-1631) erfolgen. Es wird keine optisch inaktive kationische Substanz benötigt.

Reaktion:

$$\Gamma H + NH_3 \longleftrightarrow \left(\Gamma^{-}NH_4^{+}\right)$$

Die erfindungsgemäße Bestimmung von $NH_3$ erfolgt in Analogie zur erfindungsgemäßen $CO_2$ Bestimmung:

Reaktion:

$$\left\{n(\Gamma H)^{-m}\, mL^{+n}\right\} + nNH_3 \longleftrightarrow \left(n\left\{\Gamma^{-m}\, mL^{+n}\right\}^{-} nNH_4^{+}\right)$$

**Erfindungsgemäß anwendbare pH-sensitive Chromophore:**

Die Herstellung erfindungsgemäßer Ionenpaare anionischer pH-sensitiver Chromophore aus Tabelle 1 mit geeigneten kationischen Luminophoren aus Tabelle 3 ist in den Beispielen 1a und 2a beschrieben. Die Herstellung erfindungsgemäßer pH-Sensoren mit diesen Ionenpaaren ist den Beispielen 1b (ionenpermeable Sol-Gel Matrix) und 2b (ionenpermeable Hydrogelmatrix) beschrieben. Die entsprechenden Meßdaten (mittlere Lumineszenzabklingzeit bzw. relative Lumineszenzintensität) sind in Abhängigkeit des pH-Wertes des Probenmediums in den Fig. 1 und 2 dargestellt.

Tabelle 1:

| **pH-sensitive Chromophore** | | |
|---|---|---|
| **Chromophor** | **Absorptionswellenlänge [nm]** protoniert/deprotoniert | **pKa** |
| **Triphenylmethanfarbstoffe:** | | |
| Bromphenolblau | 430/617 | 3.8 |
| Bromthymolblau | 430-435/615-618 | 6.7 |
| Dibromoxylenolblau | 420/614 | 7.6 |
| **Azofarbstoffe:** | | |
| Calmagit | 530/605 | 8.0 |
| Nitrazingelb | 460/590 | 6.5 |
| **Sonstige:** | | |
| o-Chlorophenol-indophenol | 555/625 | 7.1 |
| Naphthol-phthalein | 428/661 | 6.7 ,7.9 |

Weiters finden pH-sensitive Triphenylmethanfarbstoffe der allgemeinen Form

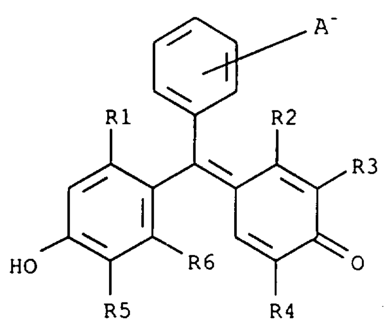

Verwendung, wobei $A^-$ für die deprotonierte Form einer starken Säure, wie z. Bsp. $-SO3^-$ oder $-COO^-$ und R1-R6 für Halogenatome, Nitrogruppen bzw. Alkylgruppen steht; sowie
pH sensitive Azofarbstoffe der allgemeinen Form,

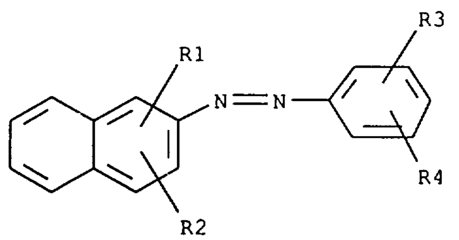

wobei R1-R4 für Substituenten, beispielsweise Halogenatome, Nitrogruppen bzw. Alkylgruppen stehen - aber mindestens eine -OH Gruppe und eine $-SO3^-$ oder $-COO^-$ Gruppe vertreten sein muß.

**Erfindungsgemäß anwendbare kationensensitive Chromophore:**

Kationensensitive Chromophore zur Bestimmung von Lithium-, Kalium-, Natrium-, Magnesium- und Calcium-Ionen sind beispielsweise anionische Azofarbstoffe, Stilbenfarbstoffe und Merocyanine welche zumindest eine anionische Gruppe und ein ionenselektives Kronenethersystem enthalten und deren längstwellige Absorptionsbande sich zumindest teilweise mit der Emissionsbande des Luminophors überlappt, wobei die Wechslwirkung mit dem zu bestimmenden Alkali- bzw. Erdalkaliionen zu einer spektralen Verschiebung der längstwelligen Absorptionsbande führt.
Die Herstellung erfindungsgemäßer ionaler Verbindungen anionischer kationensensitiver Chromophore und kationischer Luminophore erfolgt analog der Herstellung erfindungsgemäßer ionaler Verbindungen anionischer pH-sensitiver Chromophore mit kationischen Luminophoren (siehe Beispiele 1 und 2).

Tabelle 2:

| **Neutrale Ionophore** | |
|---|---|
| **Ionophor** | **Ion** |
| PTM14C4 (14-Krone-4) **) | Li+ |
| Natrium-Ionophor I bis II *) | Na+ |
| Valinomycin | K+ |
| Magnesium Ionophor ETH 3832 *) | Mg++ |
| Calcium Ionophor I-IV *) | Ca++ |

*) Ionophores for Ion-Selective Electrodes and Optodes. Fluka Chemie AG, CH-9470 Buchs, Switzerland.
**) K. Wanabe et al. Anal. Chem. 65, 1993.

Tabelle 3:

| **Kationische Luminophore** | | | |
|---|---|---|---|
| Luminophor ( L ) | Abkürzung | Absorptions-maximum (nm) | Lumineszenz-maximum (nm) |
| [(Ru(II)-tris-(2,2'-bibyridyl)]$^{2+}$ | $Ru(bpy)_3^{2+}$ | 452 | 628 |
| [(Ru(II)-tris-(4,4'-diphenyl-2,2'-bipyridyl)]$^{2+}$ | $Ru(dph\text{-}bpy)_3^{2+}$ | 474 | 632 |
| [(Ru(II)-tris-(1,10-phenanthrolin)]$^{2+}$ | $Ru(phen)_3^{2+}$ | 447 | 604 |
| [(Os(II)-bis-(terpyridin)]$^{2+}$ | | 510 | 729 |
| [(Os(II)-tris-(1,10-phenanthrolin)]$^{2+}$ | | 650 | 690 |

Als Zentralatome finden auch Ir, Rh, Pd, Pt oder Re Verwendung.
Zur Bildung von Ionenpaaren der allgemeinen Form $\{n(\Gamma H)^{-m}mL^{+n}\}$ bzw. $\{n(\Gamma)^{-m}mL^{+n}\}$ aus anionischen pH- oder ionensensitiven Chromophoren ($\Gamma^{-m}$) mit kationischen Luminophoren ($L^{+n}$) sind jene Chromophore bzw. Chromoionophore (ionensensitive Chromphore) geeignet, welche eine anionische Gruppe tragen, deren Ladungszahl sich bei den pH-Werten des Probenmaterials nicht verändert.

So tragen beispielsweise die Triphenylmethanfarbstoffe in Tab. 1 eine Sulfonsäuregruppe welche bei pH-Werten > 3 in der anionischen Form ($R-SO_3^-$) mit der Ladungszahl -1 vorliegt.

Erfindungsgemäß ist es auch möglich, zumindest eine anionische Gruppe der allgemeinen Form $-(CH_2)_x-A^{-n}$ (x = 0-4; n =1,2) an jene Chromophore zu binden, welche diese Gruppe nicht tragen.

Bevorzugte anionische Gruppen leiten sich ab von in wässriger Umgebung sauer reagierenden Verbindungen, beispielsweise Sulfonsäuren der allgemeinen Form ($R-SO_3H$) und Carbonsäuren der allgemeinen Form R-COOH.

Besonders vorteilhafte Ionenpaare zu Bestimmung von $CO_2$ (und Chlorid) sind beispielsweise 1:1 Ionenpaare bestehend aus einem anionischen Chromophor der Ladungszahl -2 (Tabelle 1, Triphenylmethanfarbstoffe oder Azofarbstoffe mit zumindest einer pH-aktiven Gruppe und einer anionischen Gruppe) und einem kationischen Luminophor der Ladungszahl +2 (Tabelle 3).

Wie aus dem Vorhergehenden ersichtlich, sind die erfindungsgemäß besonders vorteilhaften Ionenpaare zur Bestimmung von $CO_2$ und Anionen (Chlorid) identisch und liegen in hydrophoben, für ionische Probenbestandteile substantiell impermeablen Polymermaterialien vor. Bei der Bestimmung von Anionen (z.B., Chlorid) erfolgt eine Coextraktion des zu bestimmenden Anions mit einem Kation ($H^+$) in das Polymermaterial, während im Falle von $CO_2$ und $NH_3$ die ladungsneutralen Moleküle unabhängig von allfällig vorhandenen Gegenionen in das Material diffundieren können. Somit ist ersichtlich, daß bei Vorliegen gasförmiger Proben die $CO_2$-Bestimmung nicht durch anionische Bestandteile der Probe gestört wird. Dies gilt jedoch nicht allgemeinen für wässrige Proben. Zwecks Vermeidung von Störungen der $CO_2$-Bestimmung durch anionische Bestandteile wässriger Proben ist somit vorgesehen, die Sensorschicht mit einer gaspermeablen Schicht abzudecken, welche das Ionenpaar nicht enthält. Geeignete Materialien sind solche mit einer hohen Permeabilität für die zu bestimmende gasförmigen Komponenten, bespielsweise Teflon.

**Essentiell hydrophobe, ionenimpermeable Matrizen:**

Zur Herstellung erfindungsgemäßer Sensoren, welche das zu bestimmende Kation (beispielsweise K+) mit einem Proton des Probenmediums austauschen bzw. das zu messende Anion (beispielsweise Cl-) mit einem Proton des Probenmediums co-extrahieren, sind für ionale Substanzen des Probenmediums substantiell impermeable Polymermaterialien geeignet.

Diese Materialien sind auch geeignet zur Herstellung erfindungsgemäßer Sensoren zur Bestimmung von Gasen bzw. gasförmiger Komponenten flüssiger Probenmedien.

Bevorzugt werden alle essentiell hydrophoben, in organischen Lösungsmitteln lösliche Polymere wie beispielsweise Polyvinylchlorid, Polystyrole, Polycarbonate, Polyethylene, Polyurethane, Silikone, Copolymere aus Polyvinylakohol und Polyvinylacetat und Copolymere aus Polyvinylchlorid, Polyvinylalkohol und Polyvinylacetat.

Diesen Materialien können bis zu 80 Gew. % Weichmacher wie beispielsweise Dioctylsebacat, Tris-(2-ethylhexyl)-Phosphat, 2-Nitrophenyl-octyl-ether, 2-Nitrophenyl-butylether zugesetzt werden.

**Essentiell hydrophile, ionenpermeable Matrizen:**

Zur Herstellung erfindungsgemäßer Sensoren mit pH- und ionensensitiven Chromophoren werden hydrophile, ionenpermeable Polymere bevorzugt.

Beispielhaft seien hierfür Nafion, Zellulose, und Zelluloseacetate genannt. Eine wichtige Gruppe von hydrophilen Polymeren stellen die sogenannten Hydrogele dar. Beispielhaft dafür seien Polyurethane mit hydroxylischen Gruppen, Polyhydroxyethylmethacrylate, vernetzte Polyvinylalkohole, oder Polyacrylamide genannt.

Desweiteren führt auch der Einbau in Sol-gele zu pH- und ionenpermeablen Materialien. Sol-gele sind poröse organisch hergestellte glasartige Materialien, die aus Siliziumoder auch Titanorganischen Verbindungen hergestellt werden. Als typischstes Beispiel sei hier ein Sol-gel genannt, das aus Tetraethoxyorthosilan hergestellt wird.

Die Verwendung ionenpermeabler Materialien zur Herstellung erfindungsgemäßer Gassensoren ist möglich, wenn das gassensitive Material durch eine zusätzliches Material bestehend aus ionenimpermeablen, gaspermeablen Polymeren wie beispielsweise Teflon oder Silikonen von einem flüssigen Probenmedium getrennt wird.

**Beispiel 1**

**a) Herstellung eines 2:1 Ionenpaars der allgemeinen Form** $\{n(\Gamma H)^{-m} mL^{+n}\}$ **aus Bromthymolblau und** $Ru(phen)_3^{2+}$**:**

129.2 mg Bromthymolblau-Natriumsalz (200 mmol) werden in 3 ml 0.1 N NaOH und 20 ml Wasser gelöst. Nach Zugabe von 4 ml 0.1 N HCl und einer Lösung von 82.1 mg [Ru(II)-tris(1,10-phenanthrolin)]$Cl_2 \cdot 6H_2O$ (100 mmol) in 3 ml Wasser erhält man das Ionenpaar als orangen Niederschlag. Dieser wird abgesaugt, mit Wasser gewaschen und über NaOH getrocknet. Die Ausbeute betrug 80%. Der Schmelzpunkt liegt bei 237°C. Die Daten der Elementaranalyse: (ber./gef.) C: 54.14/55.68, H:4.54/4.64, N: 4.21/4.28

**b) Herstellung einer pH-sensitiven Sensorschicht**

3 mg Cetyltrimethylammoniumchlorid und 3 mg des 2:1 Ionenpaares {2(Bromthymolblau)$^{1-}$ Ru(phen)$_3^{2+}$} werden im Ultraschall in 1 ml Methanol gelöst. Nach Zugabe von 200 µl Tetramethoxysilan und 100 µl einer 0,1 N Salzsäure läßt man die Mischung 5 Tage lang in Schnappdeckelgläsern gelieren. Aus diesem Material werden Sensorfilme auf ein optisch durchlässiges Trägermaterial (Polyester) gezogen, oder optische Fasern belegt. Die Sensoren müssen anschließend mehrere Tage bei 40° C getrocknet werden.

Fig. 1 zeigt die Abhängigkeit der mittleren Abklingzeit $t_m$ vom pH-Wert des Probenmediums.

**Beispiel 2**

**a) Herstellung eines 2:1 Ionenpaars der allgemeinen Form** {n(ΓH)$^{-m}$mL$^{+n}$} **aus Ru(dph-bpy)$_3^{2+}$ und Bromthymolblau:**

129.2 mg Bromthymolblau-Natriumsalz (200 mmol) werden in 3 ml 0.1 N NaOH und 20 ml Wasser gelöst. Danach wird verdünnte Salzsäure zugegeben, bis der Indikator in die Säureform umschlägt. Diese Lösung wird in eine gesättigte wässrige Lösung des Rutheniumkomplexes [Ru(II)-tris(4,4'-diphenyl-2,2'-bipyridyl)]$Cl_2$ unter ständigen Rühren zugetropft. Das Ionenpaar fällt dabei als oranger Niederschlag aus. Dieser wird abgesaugt, mit Wasser gewaschen und über NaOH getrocknet. Die Ausbeute betrug 80%. Die Daten der Elementaranalyse: (ber./gef.) C: 61.99/60.38, H:4.64/461, N: 3.61/3.87

**b) Herstellung einer pH-sensitiven Sensorschicht**

Zur Herstellung einer 5 %igen Hydrogel-Lösung werden 4 g des Hydrogels D4 der Firma Tyndale-Plains Hunter LTD., Ringoes, NY 08551, USA, in 72 ml EtOH und 8 ml $H_2O$ innerhalb 5 h durch Rühren gelöst.

10 g dieser Lösung werden zu 5.82 mg des 2:1 Ionenpaares {2(Bromthymolblau)$^{1-}$Ru(dph-bpy)$_3^{2+}$} gegeben und so lange gerührt, bis eine homogene und klare Lösung standen ist.

Aus dieser Lösung werden Sensorfilme auf ein optisch durchlässiges Trägermaterial (Polyester) gezogen und anschließend mehrere Stunden bis zur vollständigen Verdunstung des Lösungsmittels bei Raumtemperatur gelagert.

Fig. 2 zeigt die Abhängigkeit der mittleren Abklingzeit $t_m$ und der relativen Lumineszenzintensität vom pH-Wert des Probenmediums.

**Beispiel 3**

**Herstellung einer Kalium sensitiven Sensorschicht**

2.7 mg des 2:1 Ionenpaares {(Bromthymolblau)$^{1-}$ Ru(dph-bpy)$_3^{2+}$}, 3.8 mg Valinomycin werden zusammen mit 100 mg Dioctylsebacat und 50 mg PVC in 3 ml Tetrahydrofuran gelöst. Aus dieser Mischung werden Sensorfilme gezogen, oder optische Fasern belegt. Die Sensoren werden trocken gelagert und vor der Messung mindestens 8 Stunden in einer Pufferlösung aktiviert.

Fig. 3 zeigt die Abhängigkeit der relativen Lumineszenzintensität von der $K^+$-Konzentration des Probenmediums.

In Fig. 4 ist die erfindungsgemäße Sensorschicht 1 eines schematisch in einer Schnittdarstellung gezeigten Sensors 10 auf einem für die Anregungs- und Emissionsstrahlung 2, 3 durchlässigen Substrat 4 aufgebracht. In der Sensorschicht 1, welche aus einem für die zu messende chemische Komponente der Probe 5 permeablen Matrixmaterial besteht, sind der ionische Luminophor und der ionische Chromophor immobilisiert. Die Sensorschicht 1 kann probenseitig eine Deckschicht 6 aufweisen.

Die erfindungsgemäße Sensorschicht 1 kann auch am Ende eines Lichtleiters angeordnet sein.

**Patentansprüche**

1. Sensorschicht zur quantitativen Bestimmung zumindest einer chemischen Komponente einer gasförmigen oder flüssigen Probe, welche einen auf die zu bestimmende Komponente direkt oder indirekt durch Änderung seines Absorptionsspektrums reagierenden Chromophor und einen auf die zu bestimmende Komponente nicht ansprechenden Luminophor aufweist, wobei das Emissionsspektrum des Luminophors zumindest teilweise mit dem Absorptionsspektrum des Chromophors überlappt und der Energietransfer zwischen Luminophor und Chromophor zumindest eine Lumineszenzeigenschaft des Luminophors meßbar ändert, dadurch gekennzeichnet, daß der Luminophor (L) und der Chromophor (Γ) elektrisch unterschiedlich geladene ionische Substanzen sind, welche in Form von Ionenpaaren in einem für die zu bestimmende chemische Komponente permeablen Matrixmaterial vorliegen.

**2.** Sensorschicht nach Anspruch 1, dadurch gekennzeichnet, daß im Matrixmaterial ein anionischer Chromophor (Γ) und ein kationischer Luminophor (L) vorliegen, wobei jeweils n Chromophormoleküle der Ladungszahl -m und m Luminophormoleküle der Ladungszahl +n ein n:m Ionenpaar bilden.

**3.** Sensorschicht nach Anspruch 1, dadurch gekennzeichnet, daß im Matrixmaterial ein kationischer Chromophor (Γ) und ein anionischer Luminophor (L) vorliegen, wobei jeweils n Chromophormoleküle der Ladungszahl +m und m Luminophormoleküle der Ladungszahl -n ein n:m Ionenpaar bilden.

**4.** Sensorschicht zur quantitativen Bestimmung des pH-Wertes einer Probe nach Anspruch 2, dadurch gekennzeichnet, daß n:m Ionenpaare $\{n(\Gamma H)^{-m} mL^{+n}\}$ bestehend aus einem anionischen pH-sensitiven Chromophor ($\Gamma H^{-m}$) der Ladungszahl -m und einem kationischen, pH-insensitiven Luminophor ($L^{+n}$) der Ladungszahl +n vorgesehen sind, welche in einer hydrophilen Polymermatrix vorliegen.

**5.** Sensorschicht zur quantitativen Bestimmung des $CO_2$ Partialdruckes einer Probe nach Anspruch 2, dadurch gekennzeichnet, daß n:m Ionenpaare $\{n(\Gamma H)^{-m} mL^{+n}\}$ bestehend aus einem anionischen pH-sensitiven Chromophor ($\Gamma H^{-m}$) der Ladungszahl -m und einem kationischen, pH-insensitiven Luminophor ($L^{+n}$) der Ladungszahl +n vorgesehen sind, welche in einem von der Probe durch ein ionenimpermeables, gaspermeables Material getrennten Reaktionsraum in einer wäßrigen Pufferlösung vorliegen.

**6.** Sensorschicht zur quantitativen Bestimmung des $CO_2$ Partialdruckes einer gasförmigen oder flüssigen Probe nach Anspruch 1, dadurch gekennzeichnet, daß n:m Ionenpaare $\{n(\Gamma^- Q^+)^{-m} mL^{+n}\}$ vorgesehen sind, welche aus einem anionischen deprotonierten pH-sensitiven Chromophor $((\Gamma)^{-(m+1)})$ der Ladungszahl -(m+1) verbunden mit einer lipophilen kationischen Substanz ($Q^+$) der Ladungszahl +1, somit einer Gesamtladungszahl -m und einem kationischen pH-insensitiven Luminophor ($L^{+n}$) der Ladungszahl +n bestehen, welche in einer hydrophoben, im Fall wässriger Proben für ionische Substanzen impermeablen Polymermatrix vorliegen.

**7.** Sensorschicht zur quantitativen Bestimmung des $CO_2$ Partialdruckes einer gasförmigen oder flüssigen Probe nach Anspruch 1, dadurch gekennzeichnet, daß n:m Ionenpaare $\{n\Gamma^{-m} mL^{+n}\}$ bestehend aus einem anionischen deprotonierten pH-sensitiven Chromophor ($\Gamma^{-m}$) der Ladungszahl -m und einem kationischen pH-insensitiven Luminophor ($L^{+n}$) der Ladungszahl +n, welche in einer hydrophoben, im Fall wässriger Proben für ionische Substanzen impermeablen Polymermatrix vorliegen.

**8.** Sensorschicht zur quantitativen Bestimmung der Chloridkonzentration einer Probe nach Anspruch 1, dadurch gekennzeichnet, daß n:m Ionenpaare $\{n(\Gamma^- Q^+)^{-m} mL^{+n}\}$ vorgesehen sind, welche aus einem anionischen deprotonierten pH-sensitiven Chromophor $((\Gamma)^{-(m+1)})$ der Ladungszahl -(m+1) verbunden mit einer lipophilen kationischen Substanz ($Q^+$) der Ladungszahl +1, somit einer Gesamtladungszahl -m und einem kationischen pH-insensitiven Luminophor ($L^{+n}$) der Ladungszahl +n bestehen, welche in einer hydrophoben, von Chloridionen der Probe mittels Co-extraktion permeablen Polymermatrix vorliegen.

**9.** Sensorschicht zur quantitativen Bestimmung der Chloridkonzentration einer Probe nach Anspruch 1, dadurch gekennzeichnet, daß n:m Ionenpaare $\{n\Gamma^{-m} mL^{+n}\}$ bestehend aus einem anionischen deprotonierten pH-sensitiven Chromophor ($\Gamma^{-m}$) der Ladungszahl -m und einem kationischen pH-insensitiven Luminophor ($L^{+n}$) der Ladungszahl +n vorgesehen sind, welche in einer hydrophoben, von Chloridionen der Probe mittels Co-extraktion permeablen Polymermatrix vorliegen.

**10.** Sensorschicht nach einem der Ansprüche 6 oder 8, dadurch gekennzeichnet, daß die lipophile Substanz ($Q^+$) eine quaternierte Ammoniumverbindung ist.

**11.** Sensorschicht zur quantitativen Bestimmung der Kationenkonzentration einer Probe nach Anspruch 1, dadurch gekennzeichnet daß n:m Ionenpaare $\{n(\Gamma H)^{-m} mL^{+n}\}$ bestehend aus einem anionischen pH-sensitiven Chromophor $((rH)^{-m})$ der Ladungszahl -m und einem kationischen pH-insensitiven Luminophor ($L^{+n}$) der Ladungszahl +n sowie

ein für das zu bestimmende Kation selektiver ladungsneutraler Ionophor (I) vorgesehen sind, welche in einer hydrophoben Polymermatrix vorliegen.

**12.** Sensorschicht nach einem der Ansprüche 2, oder 4-11, dadurch gekennzeichnet, daß der Luminophor (L) ein Übergangsmetallkomplex mit einem Zentralatom Ru, Os, Ir, Rh, Pd, Pt oder Re ist, wobei als Liganden 2,2'-bipyridin (bpy), 2,2' (4,4-diphenyl) bipyridyl (dph-bpy), 1,10-phenanthrolin (phen) vorgesehen sind.

**13.** Sensorschicht nach einem der Ansprüche 1-12, dadurch gekennzeichnet, daß der pH-sensitive Chromophor (Γ) ein Triphenylmethanfarbstoff oder ein Azofarbstoff ist.

**14.** Lumineszenzoptisches Verfahren zur quantitativen Bestimmung zumindest einer chemischen Komponente einer gasförmigen oder flüssigen Probe, bei welchem ein auf die zu bestimmende Komponente direkt oder indirekt durch Änderung seines Absorptionsspektrums reagierender Chromophor und ein auf die zu bestimmende Komponente nicht ansprechender Luminophor verwendet werden, wobei das Emissionsspektrum des Luminophors zumindest teilweise mit dem Absorptionsspektrum des Chromophors überlappt und die durch Energietransfer zwischen Luminophor und Chromophor hervorgerufene Änderung zumindest einer Lumineszenzeigenschaft des Luminophors zur quantitativen Bestimmung der chemischen Komponente herangezogen wird, dadurch gekennzeichnet, daß elektrisch unterschiedlich geladene ionische Substanzen als Luminophor und als Chromophor verwendet werden, welche in Form von Ionenpaaren in ein für die zu bestimmende chemische Komponente permeables Matrixmaterial eingebracht werden, sowie daß das Matrixmaterial mit der Probe in Kontakt gebracht wird.

**15.** Verfahren nach Anspruch 14, dadurch gekennzeichnet, daß ein anionischer Chromophor und ein kationischer Luminophor verwendet werden, wobei jeweils n Chromophormoleküle der Ladungszahl -m und m Luminophormoleküle der Ladungszahl +n ein n:m Ionenpaar bilden.

**16.** Verfahren nach Anspruch 14, dadurch gekennzeichnet, daß ein kationischer Chromophor und ein anionischer Luminophor verwendet werden, wobei jeweils n Chromophormoleküle der Ladungszahl +m und m Luminophormoleküle der Ladungszahl -n ein n:m Ionenpaar bilden.

**17.** Verfahren nach einem der Ansprüche 14 bis 16, dadurch gekennzeichnet, daß die durch Energietransfer hervorgerufene Veränderung der Lumineszenzabklingzeit des Luminozur Bestimmung der Konzentration, der Aktivität oder des Partialdruckes der chemischen Komponente in der flüssigen oder gasförmigen Probe herangezogen wird.

**18.** Verfahren nach einem der Ansprüche 14 bis 16, **dadurch gekennzeichnet,** daß die durch Energietransfer hervorgerufene Veränderung der Lumineszenzintensität des Luminophors zur Bestimmung der Konzentration, der Aktivität, oder des Partialdruckes der chemischen Komponente in der flüssigen oder gasförmigen Probe herangezogen wird.

## Claims

**1.** Sensor layer for quantitative determination of at least one chemical component of a gaseous or liquid sample exhibiting a chromophore which is directly or indirectly responsive to the component being determined by changing its absorption spectrum and a luminophore which is not responsive to the component being determined, there being an at least partial overlap of the emission spectrum of the luminophore and the absorption spectrum of the chromophore, and the energy transfer between luminophore and chromophore effecting a measurable change in at least one luminescence characteristic of the luminophore, wherein the luminophore (L) and the chromophore (Γ) are ionic substances of differing electrical charges, which are present as ion pairs in a matrix material that is permeable to the chemical component being determined.

**2.** Sensor layer as claimed in claim 1, wherein the matrix material has an anionic chromophore (Γ) and a cationic luminophore (L), n chromophore molecules of the charge number -m and m luminophore molecules of the charge number +n forming a n:m ionic pair.

**3.** Sensor layer as claimed in claim 1, wherein the matrix material has a cationic chromophore (r) and an anionic luminophore (L), n chromophore molecules of the charge number +m and m luminophore molecules of the charge number -n forming a n:m ionic pair.

**4.** Sensor layer for quantitative determination of the pH value of a sample as claimed in claim 2, wherein n:m ion pairs $\{n(\Gamma H)^{-m}mL^{+n}\}$ consisting of an anionic, pH-sensitive chromophore ($\Gamma H^{-m}$) with the charge number -m and a cationic, pH-insensitive luminophore ($L^{+n}$) with the charge number +n are provided, which are present in a hydrophilic polymer matrix.

**5.** Sensor layer for quantitative determination of the $CO_2$ partial pressure of a sample as claimed in claim 2, wherein n:m ion pairs $\{n(\Gamma H)^{-m}mL^{+n}\}$ consisting of an anionic, pH-sensitive chromophore ($\Gamma H^{-m}$) with the charge number -m and a cationic, pH-insensitive luminophore ($L^{+n}$) with the charge number +n are provided, which are present in aqueous buffer solution in a reaction space that is separated from the sample medium by an ion-impermeable, gas-permeable material.

**6.** Sensor layer for quantitative determination of the $CO_2$ partial pressure of a gaseous or liquid sample as claimed in claim 1, wherein n:m ion pairs $\{n(\Gamma^{-}Q^{+})^{-m}mL^{+n}\}$ are provided, which consist of an anionic, deprotonated, pH-sensitive chromophore $((\Gamma)^{-(m+1)})$ with the charge number -(m+1) combined with a lipophilic, cationic substance ($Q^{+}$) with the charge number +1, hence an overall charge number -m, and a cationic, pH-insensitive luminophore ($L^{+n}$) with the charge number +n, which are supplied in a hydrophobic polymer matrix that is impermeable to ionic substances in the case of aqueous sample media.

**7.** Sensor layer for quantitative determination of the $CO_2$ partial pressure of a gaseous or liquid sample as claimed in claim 1, wherein n:m ion pairs $\{n\Gamma^{-m}mL^{+n}\}$ are provided, which consist of an anionic, deprotonated, pH-sensitive chromophore ($\Gamma^{-m}$) with the charge number -m and a cationic, pH-insensitive luminophore ($L^{+n}$) with the charge number +n, which are supplied in a hydrophobic polymer matrix that is impermeable to ionic substances in the instance of aqueous sample media.

**8.** Sensor layer for quantitative determination of the chloride concentration of a sample as claimed in claim 1, wherein n:m ion pairs $\{(\Gamma^{-}Q^{+})^{-m}mL^{+n}\}$ are provided, which consist of an anionic, deprotonated, pH-sensitive chromophore $((\Gamma)^{-(m+1)})$ with the charge number -(m+1) combined with a lipophilic, cationic substance ($Q^{+}$) with the charge number +1, hence an overall charge number -m, and a cationic, pH-insensitive luminophore ($L^{+n}$) with the charge number +n, which are supplied in a hydrophobic polymer matrix that is permeable to chloride ions of the sample by coextraction.

**9.** Sensor layer for quantitative determination of the chloride concentration of a sample as claimed in claim 1, wherein n:m ion pairs $\{n\Gamma^{-m}mL^{+n}\}$ are provided, which consist of an anionic, deprotonated, pH-sensitive chromophore ($\Gamma^{-m}$) with the charge number -m and a cationic, pH-insensitive luminophore ($L^{+n}$) with the charge number +n, which are supplied in a hydrophobic polymer matrix that is permeable to chloride ions of the sample by coextraction.

**10.** Sensor layer as claimed in claim 6 or 8, wherein the lipophilic substance ($Q^{+}$) is a quaternated ammonium compound.

**11.** Sensor layer for quantitative determination of the cationic concentration of a sample as claimed in claim 1, wherein n:m ion pairs $\{n(\Gamma H)^{-m}mL^{+n}\}$ are provided, which consist of an anionic, pH-sensitive chromophore $((\Gamma H)^{-m})$ with the charge number -m and a cationic, pH-insensitive luminophore ($L^{+n}$) with the charge number +n, in addition to a neutral ionophore (I) that is selective for the cation being determined, which are present in a hydrophobic polymer matrix.

**12.** Sensor layer as claimed in any of claims 2, or 4-11, wherein the luminophore (L) is a transition metal complex with a central atom Ru, Os, Ir, Rh, Pd, Pt, or Re, the ligands provided being 2,2'-bipyridine (bpy), 2,2'(4,4-diphenyl) bipyridyl(dph-bpy), 1,10-phenanthroline(phen).

**13.** Sensor layer as claimed in any of claims 1-12, wherein the pH sensitive chromophore ($\Gamma$) is a triphenylmethane dye or an azo dye.

**14.** Luminescence-optical method for quantitative determination of at least one chemical component of a gaseous or liquid sample employing a chromophore which is directly or indirectly responsive to the component being determined by changing its absorption spectrum and a luminophore which is not responsive to the component being determined, the emission spectrum of the luminophore overlapping the absorption spectrum of the chromophore at least partially, and the change in at least one luminescence characteristic of the luminophore, which is effected by the energy transfer between luminophore and chromophore, being used for quantitative determination of the

chemical component, wherein luminophore and chromophore are ionic substances of differing electrical charges, which are incorporated as ion pairs in a matrix material that is permeable to the chemical component being determined, and wherein the matrix material is brought into contact with the sample.

**15.** Method as claimed in claim 14, wherein an anionic chromophore and a cationic luminophore are used, n chromophore molecules of the charge number -m and m luminophore molecules of the charge number +n forming a n:m ionic pair.

**16.** Method as claimed in claim 14, wherein a cationic chromophore and an anionic luminophore are used, n chromophore molecules of the charge number +m and m luminophore molecules of the charge number -n forming a n:m ionic pair.

**17.** Method as claimed in any of claims 14-16, wherein the change in luminescence decay time of the luminophore due to energy transfer, is employed for determining the concentration, activity or partial pressure of the chemical component in the liquid or gaseous sample.

**18.** Method as claimed in any of claims 14-16, wherein the change in luminescence intensity of the luminophore due to energy transfer, is employed for determining the concentration, activity, or partial pressure of the chemical component in the liquid or gaseous sample.

**Revendications**

**1.** Couche de détection pour la détermination quantitative d'au moins un composé chimique dans un échantillon gazeux ou liquide, qui comprend un chromophore réagissant directement ou indirectement sur le composé à déterminer en modifiant son spectre d'absorption et un luminophore ne réagissant pas avec le composé à déterminer, où le spectre d'émission du luminophore recouvre au moins partiellement le spectre d'absorption du chromophore et où le transfert d'énergie entre le luminophore et le chromophore modifie de manière mesurable au moins une propriété de luminescence du luminophore, caractérisée en ce que le luminophore (L) et le chromophore (Γ) sont des substances ioniques qui ont des charges électriques opposées et qui sont présents sous la forme d'une paire ionique dans un matériau matriciel perméable au composé chimique à déterminer.

**2.** Couche de détection selon la revendication 1, caractérisée en ce que, dans le matériau matriciel, il y a un chromophore anionique (Γ) et un luminophore cationique (L), avec n molécules de chromophore ayant comme nombre de charges -m et m molécules de luminophore ayant comme nombre de charge +n constituant une paire ionique n : m.

**3.** Couche de détection selon la revendication 1, caractérisée en ce que, dans le matériau matriciel, il y a un chromophore cationique (Γ) et un luminophore anionique (L), avec n molécules de chromophore ayant comme nombre de charges +m et m molécules de luminophore ayant comme nombre de charges -n constituant une paire ionique n : m.

**4.** Couche de détection pour la détermination quantitative de la valeur du pH d'un échantillon selon la revendication 2, caractérisée en ce que la paire ionique n : m $\{n(\Gamma H)^{-m} m L^{+n}\}$ est constituée par un chromophore anionique ($\Gamma H^{-m}$) sensible au pH ayant comme nombre de charges -m et un luminophore cationique ($L^{+n}$) insensible au pH ayant comme nombre de charges +n, l'ensemble se trouvant dans une matrice polymère hydrophile.

**5.** Couche de détection pour la détermination quantitative de la pression partielle de $CO_2$ d'un échantillon selon la revendication 2, caractérisée en ce que la paire ionique n : m $\{n(\Gamma H)^{-m} m L^{+n}\}$ est constituée par un chromophore anionique ($\Gamma H^{-m}$) sensible au pH ayant comme nombre de charges -m et un luminophore cationique ($L^{+n}$) insensible au pH ayant comme nombre de charges +n, l'ensemble se trouvant dans une solution tampon aqueuse placée dans une chambre de réaction séparée de l'échantillon par une membrane imperméable aux ions, mais perméable aux gaz.

**6.** Couche de détection pour la détermination quantitative de la pression partielle de $CO_2$ d'un échantillon gazeux ou liquide selon la revendication 1, caractérisée en ce que la paire ionique n : m $\{n(\Gamma^{-} Q^{+})^{-m} m L^{+n}\}$ est constituée par un chromophore anionique déprotoné ($\Gamma^{-(m+1)}$) sensible au pH ayant comme nombre de charges -(m +1) lié avec une substance cationique lipophile ($Q^{+}$) ayant comme nombre de charges +1, ce qui donne un nombre total de

charges égal à -m, et un luminophore cationique ($L^{+n}$) insensible au pH ayant comme nombre de charges +n, l'ensemble se trouvant dans une matrice polymère hydrophobe et, dans le cas d'un échantillon aqueux, imperméable aux substances ioniques.

**7.** Couche de détection pour la détermination quantitative de la pression partielle de $CO_2$ d'un échantillon gazeux ou liquide selon la revendication 1, caractérisée en ce que la paire ionique n : m $\{n(\Gamma^{-m}mL^{+n}\}$ est constituée par un chromophore anionique déprotoné ($\Gamma^{-m}$) sensible au pH ayant comme nombre de charges -m, et un luminophore cationique ($L^{+n}$) insensible au pH ayant comme nombre de charges +n, l'ensemble se trouvant dans une matrice polymère hydrophobe et, dans le cas d'un échantillon aqueux, imperméable aux substances ioniques.

**8.** Couche de détection pour la détermination quantitative de la concentration en chlorure d'un échantillon selon la revendication 1, caractérisée en ce que l'on prévoit une paire ionique n : m $\{n(\Gamma^{-}Q^{+})^{-m}mL^{+n}\}$ qui est constituée par un chromophore anionique déprotoné ($(\Gamma)^{-(m+1)}$) sensible au pH ayant comme nombre de charges -(m +1) lié avec une substance cationique lipophile ($Q^{+}$) ayant comme nombre de charges +1, ce qui donne un nombre total de charges égal à -m, ainsi qu'un luminophore cationique ($L^{+n}$) insensible au pH ayant comme nombre de charges +n l'ensemble se trouvant dans une matrice polymère hydrophobe qui est perméable aux ions chlorure par co-extraction.

**9.** Couche de détection pour la détermination quantitative de la concentration en chlorure d'un échantillon selon la revendication 1, caractérisée en ce que l'on prévoit une paire ionique n : m $\{n\Gamma^{-m}mL^{+n}\}$ qui est constituée par un chromophore anionique déprotoné $(\Gamma)^{-m}$ sensible au pH ayant comme nombre de charges m et un luminophore cationique ($L^{+n}$) insensible au pH ayant comme nombre de charges +n l'ensemble se trouvant dans une matrice polymère hydrophobe qui est perméable aux ions chlorure par co-extraction.

**10.** Couche de détection selon l'une des revendications 6 et 8, caractérisée en ce que la substance lipophile ($Q^{+}$) est un composé ammonium quaternaire.

**11.** Couche de détection pour la détermination quantitative de la concentration en cation d'un échantillon selon la revendication 1, caractérisée en ce que l'on prévoit une paire ionique n : m $\{n(\Gamma H)^{-m}mL^{+n}\}$ qui est constituée par un chromophore anionique ($(\Gamma H)^{-m)}$) sensible au pH ayant comme nombre de charges -m et par un luminophore cationique ($L^{+n}$) insensible au pH ayant comme nombre de charges +n, ainsi qu'un ionophore (I) neutre du point de vue charge et sélectif vis-à-vis du cation à déterminer, l'ensemble se trouvant dans une matrice polymère hydrophobe.

**12.** Couche de détection selon l'une des revendications 2 ou 4 -11, caractérisée en ce que le luminophore (L) est un complexe d'un métal de transition ayant comme atome central Ru, Os, Ir, Rh, Pd, Pt ou Re et comme ligand la 2,2'-bipyridine (bpy), le 2,2'-(4,4-diphényl)bipyridyle (dph-bpy) ou la 1,10-phénanthroline (phen).

**13.** Couche de détection selon l'une des revendications 1 - 12, caractérisée en ce que le chromophore ($\Gamma$) sensible au pH est un colorant de la classe des triphénylméthanes ou un colorant azoïque.

**14.** Procédé de détermination quantitative d'au moins un composé chimique dans un échantillon gazeux ou liquide, par luminescence optique, dans lequel on utilise un chromophore qui réagit directement ou indirectement avec le composé à déterminer en modifiant son spectre d'absorption et un luminophore qui ne réagit pas avec le composé à déterminer, le spectre d'émission du luminophore recouvrant au moins partiellement le spectre d'absorption du chromophore et le transfert d'énergie entre le luminophore et le chromophore modifiant au moins une propriété de luminescence du luminophore, lequel procédé de détermination d'un composé chimique est caractérisé en ce que l'on utilise comme luminophore et comme chromophore des substances ioniques qui ont des charges électriques opposées et qui sont incorporées sous la forme de paires ioniques dans un matériau matriciel perméable pour le composé chimique à déterminer et en ce que le matériau matriciel est amené en contact avec l'échantillon.

**15.** Procédé selon la revendication 14, caractérisé en ce que l'on utilise un chromophore anionique et un luminophore cationique, n molécules de chromophore ayant comme nombre de charges -m et m molécules de luminophore ayant comme nombre de charges +n constituant une paire ionique n : m.

**16.** Procédé selon la revendication 14, caractérisé en ce que l'on utilise un chromophore cationique et un luminophore anionique, n molécules de chromophore ayant comme nombre de charges +m et m molécules de luminophore ayant comme nombre de charges -n constituant une paire ionique n : m.

**17.** Procédé selon l'une des revendications 14 à 16, caractérisé en ce que le changement de la durée de persistance de la luminescence du luminophore provoqué par transfert d'énergie est utilisé pour déterminer la concentration, l'activité ou la pression partielle du composé chimique dans l'échantillon liquide et gazeux.

**18.** Procédé selon l'une des revendications 14 à 16, caractérisé en ce que le changement de l'intensité de la luminescence du luminophore provoqué par transfert d'énergie est utilisé pour déterminer la concentration, l'activité ou la pression partielle du composé chimique dans l'échantillon liquide ou gazeux.

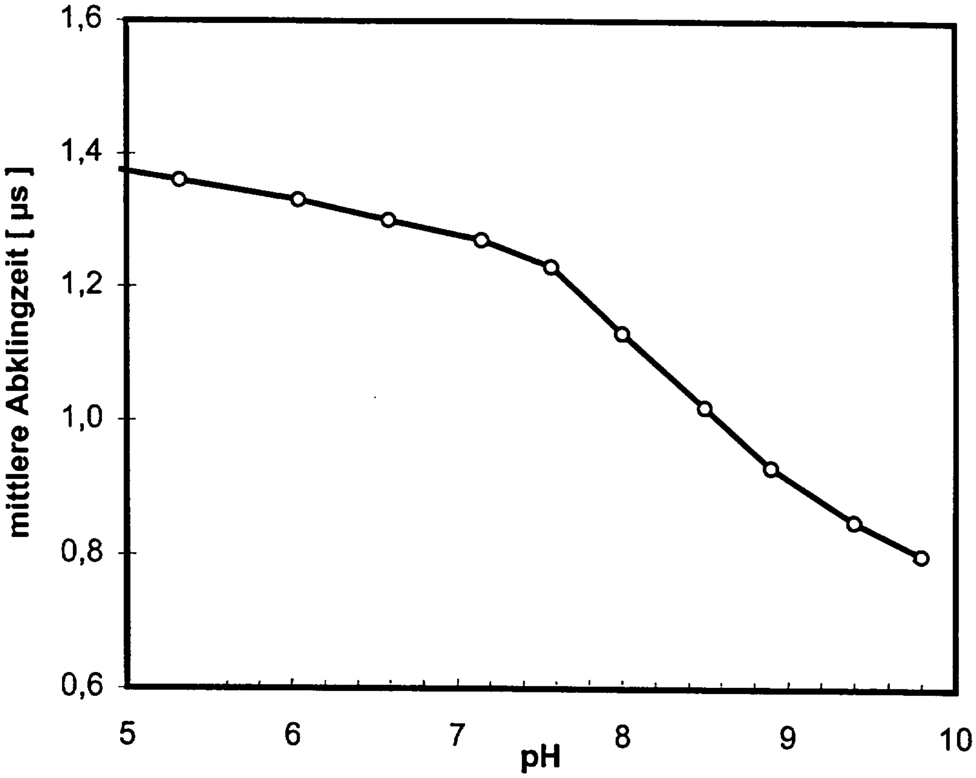
1,6
1,4
1,2
1,0
0,8
0,6
mittlere Abklingzeit [ µs ]
5
6
7
8
9
10
pH

Fig. 1

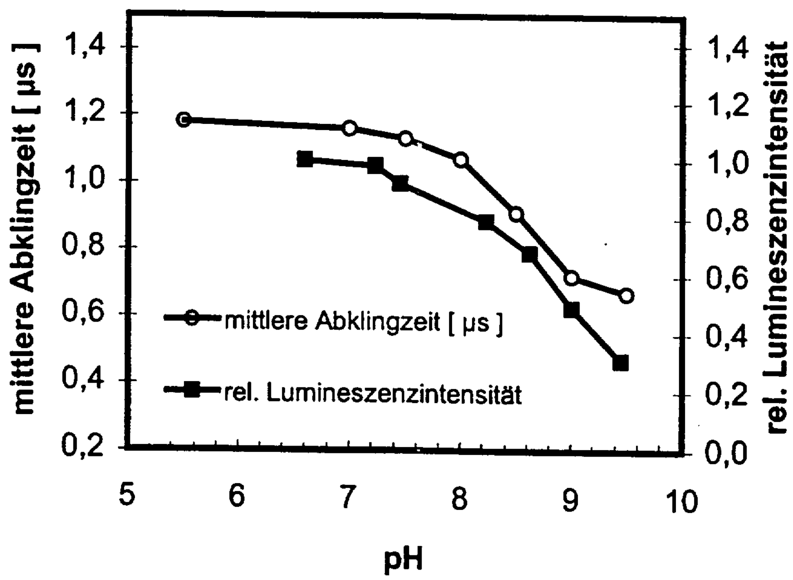
1,4
1,2
1,0
0,8
0,6
0,4
0,2
mittlere Abklingzeit [ µs ]
mittlere Abklingzeit [ µs ]
rel. Lumineszenzintensität
1,4
1,2
1,0
0,8
0,6
0,4
0,2
0,0
rel. Lumineszenzintensität
5
6
7
8
9
10
pH

Fig. 2

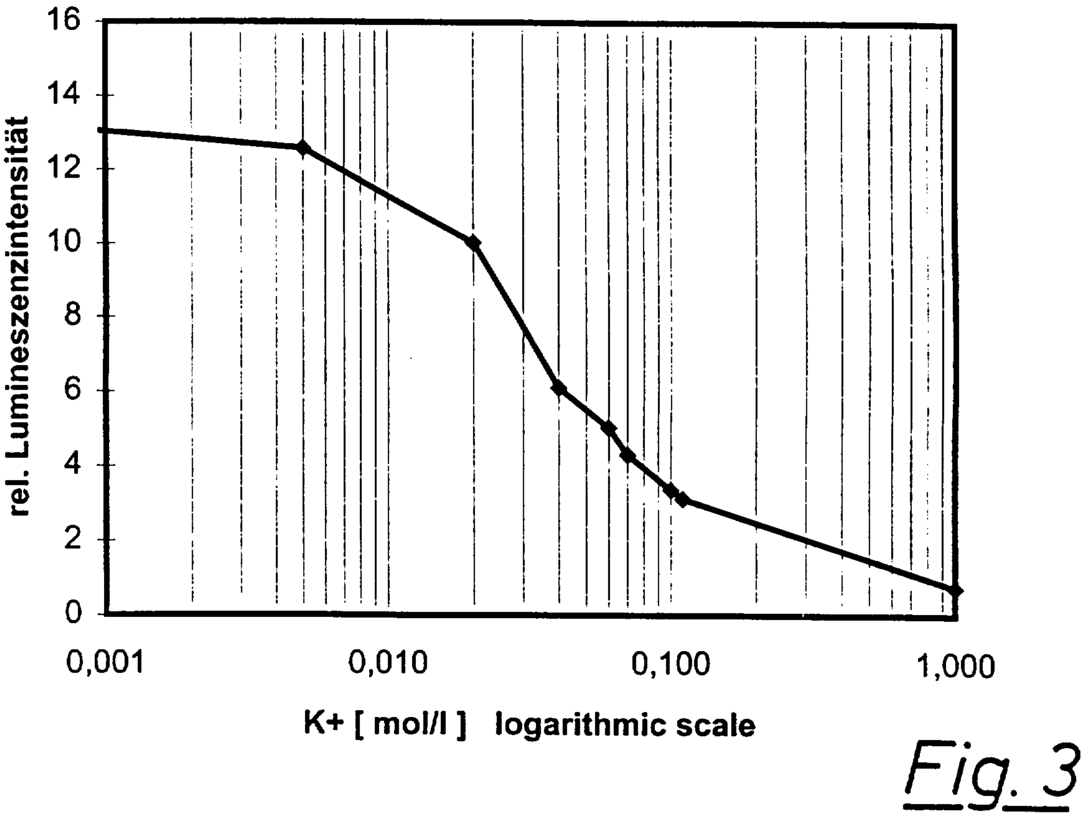
16
14
12
10
8
6
4
2
0
rel. Lumineszenzintensität
0,001
0,010
0,100
1,000
K+ [ mol/l ]   logarithmic scale

Fig. 3

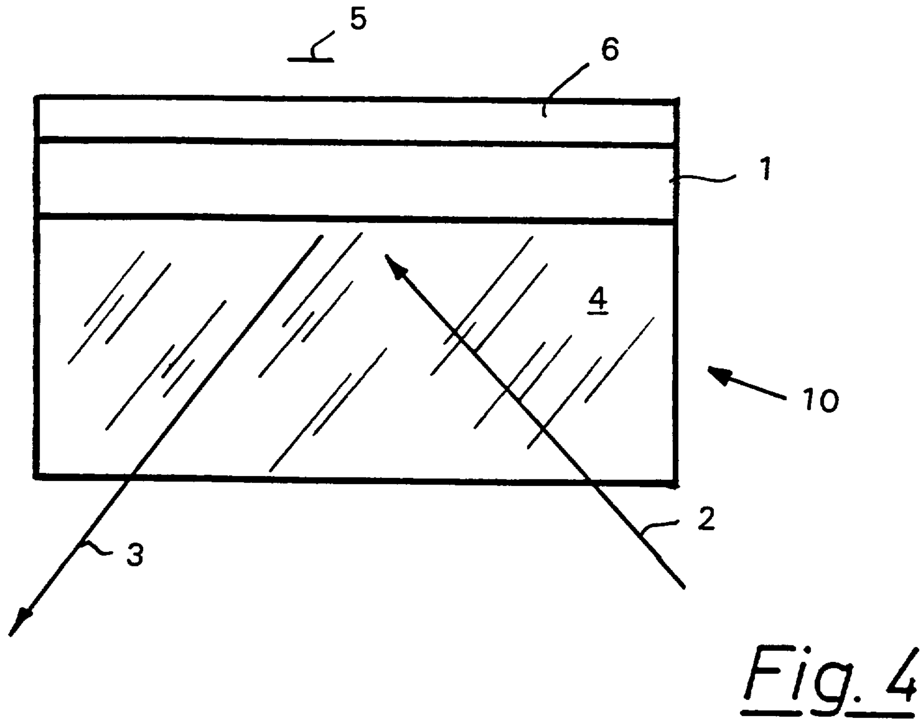
5
6
1
4
10
2
3

Fig. 4